# EUROPÄISCHE PATENTSCHRIFT

(11) **EP 0 758 829 B1**
(45) Veröffentlichungstag und Bekanntmachung des Hinweises auf die Patenterteilung: **20.12.2006**
(21) Anmeldenummer: 96112549.9
(22) Anmeldetag: 02.08.1996
(51) Int. Cl.: H04M 3/42, H04Q 3/545, H04Q 11/04

(54) **Verfahren zur Verbesserung der Betriebsweise eines programmgesteuerten Kommunikationssystems**
Method for improving the operation of a program controlled communication system
Méthode pour améliorer le fonctionnement d'un système de communication à commande programmée

(30) Priorität: 16.08.1995 DE 19530128
(43) Veröffentlichungstag der Anmeldung: 19.02.1997
(73) Patentinhaber: SIEMENS AKTIENGESELLSCHAFT, 80333 München (DE)
(72) Erfinder: Böttger, Detlev, Dipl.-Ing., 58239 Schwerte (DE); Lindemann, Werner, Dr.-Ing., 45473 Mühlheim (DE)

(56) Entgegenhaltungen:
- EP-A- 0 460 405
- US-A- 3 867 582
- US-A- 4 893 335
- US-A- 5 012 511
- US-A- 5 452 347

## Beschreibung

In modern konzipierten programmgesteuerten Kommunikationssystemen werden neben den einem Verbindungsaufbau und Verbindungsabbau zwischen Kommunikationsendgeräten zuzuordnenden Prozedurabläufe im Kommunikationssystem auch weitere Prozedurabläufe, wie sie beispielsweise die Inanspruchnahme von Teilnehmerleistungsmerkmalen und Diensten bedingen, mit Hilfe einer bestimmten Signalisierungsprozedur gesteuert. Man ist bestrebt, neben der Bereitstellung einer Vielzahl von Leistungsmerkmalen - die auch von der Art und dem Funktionsumfang der verwendeten Endgeräte abhängig sind - auch die von den Benutzern eines Kommunikationsendgerätes durchzuführenden Prozeduren zu vereinfachen. So ist es beispielsweise möglich, jeweils einen bestimmten Funktionsablauf bzw. einen bestimmten Prozedurablauf durch die Betätigung einer hierfür vorgesehenen Taste zu aktivieren. Ist an das Kommunikationssystem auch eine Datenverarbeitungseinrichtung angeschlossen, so können für den Datenverkehr zwischen der zentralen Steuerrechnereinheit des Kommunikationssystems und der Datenverarbeitungseinrichtung verschiedene Datendienste eingerichtet sein. Damit wird es möglich, mit unterschiedlichen zentralen Einrichtungen des Kommunikationssystems zu kommunizieren, z.B. Kommandos zu übergeben und Daten zu übernehmen. Es ist der Datenverarbeitungseinrichtung auch möglich, über den Datenkanal mittels entsprechender Programme Verbindungen zwischen internen oder zwischen internen und externen Terminals herzustellen.

In der Druckschrift US 3,867,582 Weed et al. "Remote control for private automatic branch telephone exchange" ist eine Anordnung aus einem Kommunikationssystem und Kommunikationsendgeräten gezeigt, wobei ein Kommunikationsgerät über eine externe Wählleitung (öffentliches Telefonnetz) das Kommunikationssystem anwählt, und wobei sich der Anrufer bei dem Kommunikationssystem durch die Eingabe eines Authentifizierungscodes identifiziert. Nach einer erfolgreichen Authentifizierung wird dem Anrufer ein Wählton eingespielt und somit an seinem externen Kommunikationsendgerät die Funktionalität eines internen Kommunikationsendgerätes bereitgestellt, so dass der Anrufer Zugriff auf Amtsleitungen, Fernverkehrs- und Auslandsverbindungen und andere Leistungsmerkmale des Kommunikationssystems erlangt, die internen Kommunikationsteilnehmern des Kommunikationssystems vorbehalten sind.

Es ist die Aufgabe der Erfindung, insbesondere im Zusammenhang mit der Ausführung von Funktionen für ein anderes Endgerät, insbesondere Fernsprechendgerät, die Betriebsweise zu verbessern. Diese Aufgabe wird ausgehend von den im Oberbegriff des Patentanspruches 1 angegebenen Merkmalen durch dessen kennzeichnende Merkmale gelöst.

Der wesentliche Aspekt der Erfindung liegt darin, daß mit Hilfe eines temporär in einen Sonderbetriebsmodus schaltbaren Endgeräts, insbesondere eines Fernsprechendgerätes, für ein beliebiges anderes Endgerät Prozeduren aktivierbar sind. Die an dem ersten Endgerät vorgenommenen Benutzereingaben durchlaufen zunächst das benutzungsoberflächenorientierte Programmodul für dieses Endgerät. Dieses Programmodul bewertet die Eingaben und stellt das Prozedurergebnis den Modulkomplexen der Vermittlungstechnik in einer "normierten Form" zur Verfügung, z.B. in der Art "aktiviere Umleitung für dieses andere Endgerät nach Endgerät x". Die Vermittlungstechnik ihrerseits sendet normierte Meldungen zurück an die benutzungsoberflächenorientierten Programmodule der beiden Partner-Endgeräte. Diese Rückmeldungen werden durch diese Programmodule so an das jeweilige Endgerät weitergegeben, wie es für das betreffende Endgerät erforderlich ist. Es können durch diese "normierte Schnittstelle" zwischen dem benutzungsoberflächenorientierten Programmodul und dem Programmodul der Vermittlungstechnik bzw. den leistungsmerkmalsrelevanten Modulen komfortable Dienste ferngesteuert werden. Da die Ergebnisse einer Prozedur in Form von normierten endgeräteunabhängigen Meldungen über die erfindungsgemäß vorgesehene Schnittstelle an die Vermittlungstechnik bzw. Leistungsmerkmalssteuerung weitergereicht wird, können Endgeräte unterschiedlicher Benutzungsoberflächen zusammenarbeiten. So kann beispielsweise ein über eine U-Schnittstelle angeschlossenes Endgerät mit Hilfe seiner menügeführten Oberfläche eine Prozedur für ein Normalfernsprechendgerät und ein Endgerät mit einer ISDN-spezifischen Oberfläche eine Prozedur für ein U-Schnittstellenendgerät aktivieren. Erfindungsgemäß werden die Rückmeldungen bzw. die Quittungen für diese Partner-Endgeräte in der für sie passenden Form zur Verfügung gestellt. Das bedeutet, daß sie ISDN-Protokollelemente darstellen können oder bei dem entsprechenden Fernsprechendgerät als Leuchtanzeige oder als Display-Text sinnlich wahrnehmbar dargestellt werden. Bei einem Normalfernsprecher könnte eine solche Quittung als ein besonderer Hörton abgegeben werden. Die Aktivierung des Sonderbetriebsmodus für das "fernsteuernde" Endgerät kann durch eine vom Teilnehmer einzugebende Prozedur, die beispielsweise in der Eingabe einer bestimmten Kennziffernfolge besteht, vorgenommen werden. Das Partner-Endgerät, für das eine Prozedur, z.B. in Form einer Wahl oder in Form der Inanspruchnahme eines Leistungsmerkmals, vorgenommen wird, kann durch die Eingabe seiner internen Rufnummer bestimmt werden.

Gemäß einer Weiterbildung der Erfindung wird das benutzungsoberflächenorientierte Programmodul des "ferngesteuerten" Partner-Endgerätes nicht durch Eingaben blockiert. Es ist also beispielsweise möglich und bei geprächsbezogenen Leistungsmerkmalen auch notwendig, daß für das gesteuerte Endgerät eine Fernsprechverbindung besteht, wenn vom steuernden Endgerät ein Leistungsmerkmal geschaltet wird. Gemäß einer Weiterbildung der Erfindung kann das Endekriterium für den Fernsteuerungsmodus auch aus dem System zur Verfügung gestellt werden. Es wird z.B. an ein ISDN-Endgerät automatisch ein Verbindungsende signalisiert, nachdem die Vermittlungstechnik an das benutzungsoberflächenorientierte Programmodul des fernsteuernden Endgerätes das Aktivieren eines Dienstes bestätigt. Die Signalisierung von Bedienfehlern oder Rufzuständen ist ebenfalls möglich. Das spezielle Endekriterium zur Beendigung des "Fernsteuerungsmodus" kann auch in anderer Weise abgegeben werden. Das Auflegen des Handapparates oder die Anzeige als Option einer anzeigbaren Menüleiste sind solche Möglichkeiten.

Weitere vorteilhafte Ausgestaltungen der Erfindung sind den restlichen Unteransprüchen zu entnehmen.

Die Erfindung wird im folgenden anhand eines figürlich dargestellten Ausführungsbeispiels erläutert. In der FIG ist die Struktur eines digitalen Kommunikationssystems schematisch dargestellt. Es sind lediglich die zum Verständnis der Erfindung notwendigen Komponenten gezeigt.

Zentraler Bestandteil des Kommunikationssystems KS, das ein sog. Nebenstellen-Kommunikationssystem darstellt ist ein zentrales Koppelfeld KF, über das Endgeräte - von denen die Fernsprechendgeräte FE1 und FEx schematisch angedeutet sind - miteinander bzw. mit zu einem öffentlichen Kommunikationssystem ÖN führenden Leitungen AL verbindbar sind. Das zentrale Koppelfeld KF steht unter dem Steuereinfluß einer zentralen Anlagensteuerung AST, die neben dem Zentralprozessor CPU eine Speichereinrichtung SPE und eine Takteinheit TG enthält. Der Zentralprozessor steuert sämtliche Vermittlungsvorgänge und besorgt eine Aufbereitung und Zuteilung der Steuerdaten. Diese Aufgaben können auch auf mehrere Prozessoren aufgeteilt werden.

Im Kommunikationssystem KS sind Leitungsanschlußeinrichtungen, symbolisiert durch die Leitungsanschlußeinrichtung LT angeordnet. Diese enthalten jeweils Teilnehmeranschlußmodule SLM. Diese Teilnehmeranschlußmodule sind über Teilnehmeranschlußleitungen ASL jeweils mit einem der Kommunikationsendgeräte FE bis FEx verbunden, wobei grundsätzlich unterschiedliche Teilnehmeranschlußmodule vorgesehen sein können. Dies sind zum einen Teilnehmeranschlußmodule für den Anschluß analoger Kommunikationsendgeräte und zum anderem Teilnehmeranschlußmodule für den Anschluß unterschiedlich strukturierter digitaler Kommunikationsendgeräte. Ein solches digitales Teilnehmeranschlußmodul ist für den Anschluß einer ganz bestimmten Anzahl von digitalen Kommunikationsendgeräten vorgesehen. Die Nachrichtenübertragung erfolgt hierbei z.B. über Nachrichtenkanäle N und die Signalisierung wird über einen zusätzlichen Kanal S übermittelt. Die vom Kommunikationsendgerät z.B. FE übermittelten digitalen Sprachinformationen werden ebenfalls über eine Multiplex-Einrichtung MUX zum Koppelfeld KF weitergegeben. Vermittlungstechnisch gesteuert werden die Leitungsanschlußeinrichtungen LT von der Systemsteuerung AST. Hierbei ist jede Leitungsanschluß-Einrichtung über einen Signalisierungskanal SK mit der Systemsteuerung AST verbunden. Über diesen Signalisierungskanal SK werden die Informationen mit Hilfe der bekannten HDLC-Übermittlungsprozedur ausgetauscht. Die in der Systemsteuerung gebildeten Taktsignale werden über eine Taktleitung TL an die Leitungsanschluß-Einrichtungen LT verteilt. Das Zurverfügungstellen der Taktsignale ist durch die Einheit TG symbolisiert.

Der Zugriff zu einer Amtsleitung AL über die, ggf. als eine von mehreren - das Kommunikationssystem KS beispielsweise mit dem öffentlichen Netz ÖN verbunden ist, erfolgt über die Schnittstelle LS. Diese Schnittstelle beinhaltet beispielsweise einen ISDN-Teil, der z.B. als standardisierte SO-Schnittstelle ausgebildet sein kann. Die Peripherie des Kommunikationssystems wird ergänzt durch eine Signalisierungseinheit SE, die zur Zeichenversorgung des Kommunikationssystems vorhanden ist.

Der zentrale Prozessor CPU der Systemsteuerung AST hat Zugriff zu den in der Speichereinrichtung SPE abgelegten Daten. Sie besteht grundsätzlich aus den Speicherteilen PROM und RAM. In dem Programmspeicherteil PROM ist das Anlagenbetriebsprogramm und die zu ihm bezüglich der Peripherietechnik, der Betriebstechnik, der Sicherheitstechnik und der Vermittlungstechnik gehörenden Programme abgespeichert. Dies ist bezüglich der Vermittlungstechnik durch das Modul VT angedeutet. Mit LM ist ein Modul bezeichnet, daß symbolisch für die zur Realisierung der einzelnen Leistungsmerkmale vorhandenen Programmodule steht. Durch die Programmkomponente BOF wird die sog. Benutzeroberfläche gesteuert. Dieses Programmodul beinhaltet unterschiedliche Prozeduren.

In dem Speicherteil RAM ist als Teileinheit der Datenbasis der Speicherbereich KD angedeutet. In diesem sind die Kundendaten, wie z.B. die den einzelnen Endgeräten FE zugeteilten Berechtigungen und die Systemkonfiguration abgelegt. In dem Teilbereich SYS sollen die systembezogenen Daten enthalten sein. Der Speicherteil RAM dient u.a. der Aufnahme von temporären Daten zur Programmablaufsteuerung. Es werden in ihm auch Daten übernommen, die während eines durch ein Kommunikationsendgerät initiierten Verbindungsaufbaus oder bei der Inanspruchnahme eines Dienstes bzw. eines Leistungsmerkmales abgefragt werden. In dem Speicherbereich FD ist jedem Endgerät ein Speicherabschnitt zugeteilt, in dem sämtliche endgerätebezogenen Daten abgelegt sind. Es ist also daraus der aktuelle vermittlungstechnische Zustand, beispielsweise ob der betreffende Teilnehmer den Handapparat abgehoben hat, ob er gerufen wird usw., als Speicherinformation entnehmbar. In jedem dieser Speicherabschnitte - gezeigt ist lediglich der Speicherabschnitt FE1-D für das Endgerät FE und der Speicherabschnitt FEx-D für das Endgerät FEx - werden Informationen abgespeichert, die die in Anspruch zu nehmenden Leistungsmerkmale oder auch die bereits beanspruchten Leistungsmerkmale betreffen. Sie sind also jeweils als dynamische Datenbasis für die einzelnen Endgeräte anzusehen. In dem Speicherbereich FD sind endgerätebezogen beispielsweise auch Kennungen für das durch die jeweilige Benutzereingabe oder für das durch die vermittlungstechnischen Abläufe jeweils angeforderte Menü enthalten. Eine derartige Menüleiste wird dann auf der Anzeigeeinrichtung, die z.B. in Form eines alphanumerischen Displays DL realisiert ist, angeboten. Das darzustellende Menü beinhaltet einen Satz von Optionen, wobei diese einzelnen Optionen durch die Komponente "Benutzungsoberfläche" BOF für die Darstellung auf dem Display aufbereitet werden. Der Benutzer hat die Möglichkeit beispielsweise durch die Betätigung einer Folgetaste FT sich die nächste Option anzeigen zu lassen oder eine angezeigte Option durch die Betätigung einer Bestätigungstaste BT zu aktivieren.

Es besteht für die Kommunikationsendgeräte - entweder für alle Kommunikationsendgeräte oder für bestimmte, als hierzu berechtigt ausgewählte Kommunikationsendgeräte - die Möglichkeit, einen Betriebsmodus einzunehmen, in dem das betreffende Kommunikationsendgerät für ein anderes zu spezifizierendes Endgerät bestimmte Funktionen, Leistungsmerkmale und Dienste ausführen bzw. initiieren kann. Dieser besondere Zustand wird nicht durch einen Eintrag in einem Speicher, beispielsweise dem Kundendatenspeicher, manifestiert, sondern er kann temporär eingenommen werden. Während eines solchen Zeitraums besteht also für das betreffende Endgerät die Möglichkeit, für ein anderes Endgerät im Sinne einer "Fernsteuerung" tätig zu werden. Der Einstieg in diesen Fernsteuerungsmodus zur Ausführung von Prozeduren für ein anderes Endgerät tritt beispielsweise durch Eingabe einer vorgegebenen Aktivierungskennzahl ein. Eine andere Möglichkeit besteht in der Auswahl eines entsprechenden Menüpunktes einer z.B. auf der Anzeigeeinrichtung des betreffenden Endgerätes darstellbaren Menüleiste. Es werden dabei die im Kommunikationssystem vorhandenen Prozeduren, die die vom Teilnehmergerät ausgehenden Informationen behandeln und verarbeiten, zum Ablauf gebracht. Zur Kennzeichnung des fernzusteuernden Kommunikationsendgerätes, beispielsweise des Endgerätes FEx, wird seine interne Rufnummer durch den Benutzer des Endgerätes, z.B. des Endgerätes FE1, das in diesen Sonderbetriebsmodus eingetreten ist, eingegeben. Dessen Kennung ist in dem diesem Endgerät FE1 zugeordneten Speicherabschnitt FE1-D des Speichers FD eingeschrieben. Die Softwarekomponente Benutzungsoberfläche BOF empfängt über die Komponente Device Handler DH Tastenbetätigungen von der Peripherie.

Die Programmkomponente DH erzeugt aus den empfangenen Anreizen logische Tastendrücke, die als in einem vorgegebenen Protokoll verschlüsselte Meldungen an die Softwarekomponenten BOF übergeben und entsprechend verarbeitet werden. Durch bestimmte Mechanismen in einem vorausgesetzten zustandsanreizgesteuerten System wird die Benutzungsoberflächekomponente in der Weise für die Endgeräte zur Verfügung gestellt, daß sie von mehreren Endgeräten parallel durchlaufen werden können. In Abhängigkeit davon, welches Kommunikationsendgerät FE die Prozedur der "Fernsteuerung" einleitet, wird ein unterschiedlicher Taskindex zugeordnet und damit der parallele Zugriff mehrerer Endgeräte ermöglicht. Wird beispielsweise durch den Teilnehmer des Endgerätes FE1, das ein Fernsprechendgerät darstellt, die Aktivierungskennzahl für den Sonderbetriebsmodus eingegeben, so wird damit in der Anlage erkannt, daß eine "Fernsteuerung" eines anderen Endgerätes, beispielsweise des Fernsprechendgerätes FEx, erfolgen soll. Dieses Endgerät wird durch die Einwahl seiner internen Rufnummer bestimmt. Anschließend werden dann durch diesen Teilnehmer diejenigen Informationen eingegeben, die der von ihm für den anderen Teilnehmer gewünschten Prozedur entsprechen. Diese Prozedur kann eine Wahl oder auch insbesondere die Aktivierung eines Dienstes bzw. eines Leistungsmerkmals repräsentieren. Erhält über die Programmkomponente DH-FE1 der Programmbaustein BOF-FE1 diese Informationen in Form der Meldungen M1, so werden diese bis zum Erhalt der gesamten Information zunächst gesammelt und entsprechend bewertet. Das Ergebnis dieser Bewertung wird der Vermittlungstechnik über die fernsprecherunabhängige Schnittstelle nMS zur Verfügung gestellt. In dieser Strukturebene VT/LM sind neben den Modulen MS für die systembezogenen Verwaltungsmechanismen auch endgerätebezogene Programmodule vorhanden. Dies ist durch die Programmodule M-FE1 für das Fernsprechendgerät FE1 und durch das Programmodul M-FEx für das Fernsprechendgerät FEx angedeutet. Es kann somit grundsätzlich ein Endgerät mit einer bestimmten Benutzungsoberfläche für ein anderes Endgerät mit davon abweichender Benutzungsoberfläche in dem beschriebenen Sinne tätig werden. Da an solchen Endgeräten unterschiedliche Tasten vorhanden sind, ergibt sich dadurch eine unterschiedliche Interpretation der Tastenbetätigungen. Die Ergebnisse der eingegebenen Prozedur werden jedoch in Form von normierten endgeräteunabhängigen Meldungen an das sowieso vorhandene Programmodul M-FEx weitergeleitet. In diesem Fall ist also dann das Endgerät FEx das Partner-Endgerät für das z.B. ein bestimmter Dienst aktiviert werden soll. Neben der Übergabe der Informationen über die normierte Meldungsschnittstelle nMS werden auch in dem Datenbereich D die auf die Partner-Endgeräte FE1 und FEx bezogenen Daten geändert. Die Übergabe der Meldungen zu den einzelnen erwähnten Programmkomponenten erfolgt unter dem Einfluß des Betriebssystems BS.

Bei diesem erfindungsgemäßen Prinzip für die Dienste bzw. Leistungsmerkmalssteuerung für ein anderes Endgerät werden durch die Vermittlungstechnik normierte Meldungen an das entsprechende benutzungsoberflächenorientierte Programmodul, in dem vorausgesetzten Beispiel das Modul BOF-FE1, und an das Programmodul BOF-FEx zurückgesendet. Dies ist durch die Meldungspfeile nRM1 bzw. nRMx in der FIG angedeutet. Diese Rückmeldungen bzw. Quittungen werden durch die benutzungsoberflächenorientierten Programmodule in der für das jeweilige Endgerät erforderlichen Form umgewandelt und an das Endgerät als Rückmeldung RM1 bzw. als Rückmeldung RMx weitergegeben. Damit wird bei der Einleitung eines Dienstes für ein anderes Endgerät auch dem aktivierenden Endgerät eine Information darüber übermittelt, ob die vorgesehene Aktivierung tatsächlich erfolgen konnte oder ob dies nicht der Fall ist. Diese Quittungen werden also beispielsweise als ISDN-spezifische Meldungen an ein ISDN-orientiertes Endgerät und als Displaytexte bzw. als Leuchtanzeigeninformation an ein U-Schnittstellenendgerät übermittelt. Eine solche Rückmeldung kann auch zum automatischen Beenden des Sonderbetriebsmodus nach erfolgreicher Wahlhilfe bzw. Dienste oder Leistungsmerkmalsaktivierungshilfe genutzt werden.

Die erfindungsgemäße Verarbeitung der Eingaben im Zustand des einzustellenden Fernsteuermodus bietet die Möglichkeit, daß Endgeräte mit unterschiedlichen Benutzungsoberflächen füreinander aktiv werden. Dies kann durch Wahlhilfe oder durch die Inanspruchnahme von Diensten bzw. Leistungsmerkmalen für das andere Gerät erfolgen. Es könnte also beispielsweise im Hotelbetrieb von der Rezeption, der ein Fernsprechendgerät mit äußerst komfortabler Ausstattung zur Verfügung steht, für einen z.B. in Form eines Normalgerätes ausgestatteten Gastfernsprecher durch eine entsprechende Eingabe der Wahlinformation eine Verbindung aufgebaut werden. Dies ist insbesondere auch für ein Endgerät möglich, dessen Wähltastatur nicht bedient zu werden braucht oder das keine derartige Wähltastatur aufweist. Bei der erfindungsgemäßen Lösung wird das benutzungsoberflächenorientierte Modul des Partner-Endgerätes nicht durch Eingaben blockiert. Es ist also möglich, daß z.B. von einem Rezeptionsfernsprecher des Hotels ein Leistungsmerkmal geschaltet wird, während der Gast sich in einer Gesprächsverbindung befindet.

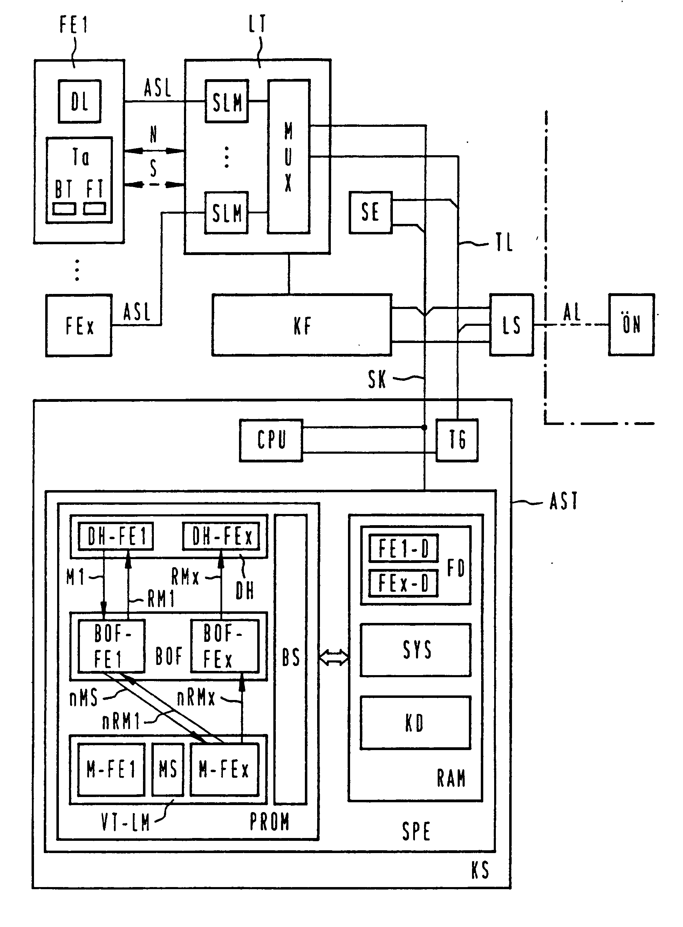

## Patentansprüche

1. Verfahren zur Betriebsweise eines programmgesteuerten Kommunikationssystems (KS), wobei die Systemsteuerung aus wenigstens einem Systemprozessor (CPU) und einem Systemspeicher (SPE) besteht, der für die im Kommunikationssystem ablaufenden vermittlungstechnischen Prozeduren Modulkomponenten zur Steuerung von Endgerätefunktionen sowie zur Steuerung von Leistungsmerkmalsfunktionen aufweist und zur Speicherung für anschlußbezogene Informationen dient, und wobei die am jeweils angeschlossenen Kommunikationsendgerät durch den Benutzer eingegebenen Informationen der Systemsteuerung übermittelt werden und diese daraufhin die Ausführung des jeweiligen Prozedurablaufes veranlaßt,
**dadurch gekennzeichnet,**
**daß** für ein erstes Endgerät (FE1) temporär ein Sonderbetriebsmodus aktivierbar ist, in dem durch dieses Endgerät (FE1) für ein beliebiges anderes Endgerät (FEx) Prozeduren initiierbar sind, daß hierzu die eingegebene Aktivierungsinformation sowie die das jeweils andere Endgerät (FEx) kennzeichnende Information zunächst von einem die Benutzungsoberfläche des ersten Endgerätes repräsentierenden Programm-Modul (BOF-FE1) aufgenommen und derart verarbeitet werden, daß sie als endgerätetypunabhängige Schnittstelleninformationen ein dem anderen Endgerät (FEx) zugeordneten Programmodul (M-FEx) in der vexinittlungstechnik- und leistungsmerkmalrelevanten Strukturebene (VT-LM) übergeben und von diesem die den Eingaben am ersten Endgerät (FE1) entsprechenden Prozeduren für dieses andere Endgerät (FEx) abgewickelt werden, daß über das Ergebnis dieser Prozedurabwicklung zur endgerätespezifischen sinnlich wahrnehmbaren Darstellung Informationen sowohl dem ersten Endgerät (FE1) als auch dem anderen Endgerät (FEx) von dem Programmodul (M-FEx) der vermittlungstechnik- und leistungsmerkmalrelevanten Strukturebene als Rückmeldung (RM1 bzw. RMx) über das jeweilige benutzungsoberflächenorientierte Programmodul (BOF-FE1 bzw. BOF-FEx) in der für sie jeweils notwendigen Form zur Verfügung gestellt werden, so daß die variabel vorzugebenden jeweiligen Partnerendgeräte (FE1 und FEx) sich in ihrem Endgerätetypus und somit auch in ihrer Benutzungsoberfläche unterscheiden können und daß der Übergang von diesem Sonderbetriebsmodus des ersten Kommunikationsendgerätes (FE1) in seine normale Betriebsweise durch die Generierung eines speziellen Endekriteriums erfolgt.

2. Verfahren nach Anspruch 1,
**dadurch gekennzeichnet,**
**dass** die initiierbaren Prozeduren Dienste und/oder Leistungsmerkmalsprozeduren sind.

3. Verfahren nach Anspruch 1 oder 2,
**dadurch gekennzeichnet,**
**daß** die Aktivierung des Sonderbetriebsmodus für das erste Endgerät (FE1) durch eine einzugebende Prozedur vornehmbar ist.

4. Verfahren nach einem der vorhergehenenden Ansprüche,
**dadurch gekennzeichnet,**
**daß** die variable Bestimmung des anderern Endgerätes (FEx) durch die Eingabe einer entsprechenden Kenninformation erfolgt, und daß die Ergebnisse der nachfolgenden Prozedur so bewertet werden, als seien sie an dem an das Kommunikationssystem angeschlossenen anderen Endgerät (FEx) eingegeben worden.

5. Verfahren nach Patentanspruch 4,
**dadurch gekennzeichnet,**
**dass** die Kenninformation die interne Rufnummer des anderen Endgerätes (FEx) umfasst.

6. Verfahren nach Anspruch 1,
**dadurch gekennzeichnet,**
**daß** der Rückmeldung mit Bezug auf eine an diesem anderen Endgerät (FEx) vorgenommene Benutzeraktivität eine solche Priorität zugeteilt ist, daß diese Benutzeraktivität in zeitlicher Übereinstimmung mit einer am ersten Kommunikationsendgerät (FE1) erfolgenden Eingabe möglich ist.

7. Verfahren nach Anspruch 1,
**dadurch gekennzeichnet,**
**daß** die Rückmeldung gleichzeitig als vom System zur Verfügung gestelltes Endekriterium dient.

8. Verfahren nach Anspruch 1,
**dadurch gekennzeichnet,**
**daß** das Endekriterium durch das Aufliegen des Handapparates oder einer damit korrespondierenden Handlung des Benutzers oder automatisch zeitgesteuert nach der letzten prozedurbezogenen Eingabe des Benutzers abgegeben wird.

9. Verfahren nach Anspruch 1,
**dadurch gekennzeichnet,**
**daß** das Endekriterium als Option einer im Zusammenhang mit der Bedienerführung auf der Anzeigeeinrichtung (DL) des ersten Kommunikationsendgerätes (FE1) anzeigbaren Menüleiste darstellbar und durch die Bestätigungsinfoxination (Taste BT) des Benutzers initiierbar ist.

10. Verfahren nach Anspruch 1 oder 3,
**dadurch gekennzeichnet,**
**daß** die Aktivierungsinformation zur Herstellung des Sonderbetriebsmodus durch die Einwahl einer hierfür repräsentativen Aktivierungskennzahl oder durch die Betätigung einer mit dieser Kennzahl unterlegten Funktionstaste vornehmbar ist.

11. Verfahren nach Anspruch 1,
**dadurch gekennzeichnet,**
**daß** die Aktivierungsinformation zur Herstellung des sonderbetriebsmodus eine Option einer im Zusammenhang mit der Bedienerführung auf der Anzeigeeinrichtung (Display DL) des ersten Kommunikationsendgerätes (FE1) anzeigbaren Menüleiste darstellt und durch die Bestätigungsinformation (Taste BT) des Benutzers initiierbar ist.

12. Verfahren nach einem der vorhergehenden Ansprüche,
**dadurch gekennzeichnet,**
**daß** für die Inanspruchnahme des Sonderbetriebsmodus für das betreffende Kommunikationsendgerät (FE1) eine diesbezügliche Berechtigung zugeteilt ist.

13. Verfahren nach einem der vorhergehenden Ansprüche,
**dadurch gekennzeichnet,**
**daß** die vom Benutzer nach der Aktivierungsinformation vermittels der Bedienungselemente des Kommunikationsendgerätes eingegebenen nachfolgenden Informationen zunächst gesammelt und als Datenblock zusammengefaßt dem Programmodul (M-FEx) der Vermittlungstechnik und leistungsmerkmalrelevanten Strukturebene (VT-LM) übergeben werden.

## Claims

1. Method for operating a program-controlled communication system (KS), in which the system controller comprises at least one system processor (CPU) and one system memory (SPE) which, for the switching procedures executed in the communication system, has module components for controlling terminal functions as well as for controlling feature functions, and which serves to store connection-relevant information, and in which the information entered by the user at the respective communication terminal connected is passed to the system controller, whereupon the latter initiates execution of the respective procedure sequence,
**characterized in that** a special operating mode can be activated temporarily for a first terminal (FE1), **in that** procedures can be initiated by said terminal (FE1) for any other terminal (FEx), **in that** for this purpose the activation information entered as well as the information characterizing the respective other terminal (FEx) is first taken up by a program module (BOF-FE1) representing the user interface of the first terminal and is processed in such a way that it is passed as terminal type-independent interface information to a program module (M-FEx) assigned to the other terminal (FEx) on the switching and feature-relevant structure level (VT-LM), and the procedures corresponding to the inputs at the first terminal (FE1) for said other terminal (FEx) are processed by said module, **in that** information is made available about the result of said procedure processing for terminal-specific representation perceivable to the senses to both the first terminal (FE1) and to the other terminal (FEx) by the program module (M-FEx) of the switching and feature-relevant structure level as a confirmation (RM1 or RMx respectively) via the respective user-interface oriented program module (BOF-FE1 or BOF-FEx respectively) in the form required for it in each case, so that the variable respective partner terminals (FE1 and FEx) to be specified may differ with respect to their terminal type and consequently also with respect to their user interface, and **in that** the switching over from said special operating mode of the first communication terminal (FE1) into its normal operating mode is achieved by generating a special end criterion.

2. Method according to Claim 1, **characterized in that** the procedures that can be initiated are services and/or feature procedures.

3. Method according to Claim 1 or 2, **characterized in that** the special operating mode for the first terminal (FE1) can be activated by a procedure to be entered.

4. Method according to one of the preceding Claims, **characterized in that** the variable specification of the other terminal (FEx) is performed by entering a corresponding identifier information, and **in that** the results of the following procedure are evaluated as if they had been entered at the other terminal (FEx) connected to the communication system.

5. Method according to Claim 4, **characterized in that** the identifier information comprises the internal phone number of the other terminal (FEx).

6. Method according to Claim 1, **characterized in that** assigned to the confirmation with reference to a user activity performed at said other terminal (FEx) is a priority such that said user activity is possible concurrently with an input made at the first communication terminal (FE1).

7. Method according to Claim 1, **characterized in that** the confirmation serves simultaneously as the end criterion provided by the system.

8. Method according to Claim 1, **characterized in that** the end criterion is output by replacing the handset or another corresponding action of the user, or automatically under time control following the last procedure-related input of the user.

9. Method according to Claim 1, **characterized in that** the end criterion can be represented as an option of a menu bar that can be displayed on the display means (DL) of the first communication terminal (FE1) in connection with the user guidance and can be initiated by the confirmation information (key BT) of the user.

10. Method according to Claim 1 or 3, **characterized in that** the activation information for initiating the special operating mode can be performed by keying in an activation code representing such a mode or by pressing a function key associated with said code.

11. Method according to Claim 1, **characterized in that** the activation information for initiating the special operating mode represents one option of a menu bar that can be displayed on the display means (display DL) of the first communication terminal (FE1) in connection with the user guidance and can be initiated by the confirmation information (key BT) of the user.

12. Method according to one of the preceding Claims, **characterized in that** an appropriate authorization is assigned for activation of the special operating mode for the respective communication terminal (FE1).

13. Method according to one of the preceding Claims, **characterized in that** the subsequent information entered following the activation information by the user by means of the operating elements of the communication terminal is first collected and is passed in combined form as a data block to the program module (M-FEx) of the switching and feature-relevant structure level (VT-LM).

## Revendications

1. Procédé d'exploitation d'un système de communication (KS) commandé par programme enregistré, dans lequel la commande de système est constituée d'au moins un processeur de système (CPU) et d'une mémoire de système (SPE) qui comporte, pour les procédures techniques de commutation s'exécutant dans le système de communication, des composants formant modules pour la commande de fonctions de terminaux ainsi que pour la commande de fonctions de services ou fonctionnalités et qui sert à la mémorisation d'informations se rapportant aux raccordements et dans lequel les informations entrées par l'utilisateur sur le terminal de communication respectivement raccordé sont transmises à la commande de système qui provoque alors l'exécution de la procédure respective,
**caractérisé par le fait que**
pour un premier terminal (FE1), on peut activer temporairement un mode de fonctionnement spécial dans lequel des procédures peuvent être déclenchées par ce terminal (FE1) pour un autre appareil quelconque (FEx),
à cet effet, l'information d'activation entrée ainsi que l'information caractérisant l'autre terminal respectif (FEx) sont d'abord reçues par un module de programme (BOF-FE1) représentant l'interface d'utilisateur du premier terminal et sont traitées de telle sorte qu'elles sont transférées comme informations d'interface indépendantes du type de terminal à un module de programme (M-FEx) associé à l'autre terminal (FEx) dans le niveau de structure (VT-LM) déterminant pour la technique de commutation et pour les fonctionnalités et que ledit module de programme exécute pour cet autre terminal (FEx) les procédures correspondant aux entrées sur le premier terminal (FE1),
par l'intermédiaire du résultat de cette exécution de procédure et en vue d'une présentation perceptible spécifique au terminal, des informations sont mises à disposition aussi bien du premier terminal (FE1) que de l'autre terminal (FEx) par le module de programme (M-FEx) du niveau de structure déterminant pour la technique de commutation et pour les fonctionnalités, et ce comme message en retour (RM1 ou RMx), par l'intermédiaire du module de programme respectif (BOF-FE1 ou BOF-FEx) orienté interface d'utilisateur et sous la forme respectivement nécessaire de telle sorte que les terminaux partenaires respectifs (FE1 et FEx) à prescrire de manière variable peuvent se distinguer par leur type de terminal et donc aussi par leur interface d'utilisateur
et la transition de ce mode de fonctionnement spécial du premier terminal de communication (FE1) à son mode de fonctionnement normal s'effectue en produisant un critère de fin spécial.

2. Procédé selon la revendication 1,
**caractérisé par le fait que** les procédures pouvant être déclenchées sont des services et/ou des procédures de fonctionnalités.

3. Procédé selon la revendication 1 ou 2,
**caractérisé par le fait que** l'activation du mode de fonctionnement spécial pour le premier terminal (FE1) peut être effectuée par une procédure à entrer.

4. Procédé selon l'une des revendications précédentes,
**caractérisé par le fait que** la détermination variable de l'autre terminal (FEx) s'effectue par l'entrée d'une information caractéristique correspondante et que les résultats de la procédure consécutive sont évalués comme s'ils avaient été entrés sur l'autre terminal (FEx) raccordé au système de communication.

5. Procédé selon la revendication 4,
**caractérisé par le fait que** l'information caractéristique comprend le numéro d'appel interne de l'autre terminal (FEx).

6. Procédé selon la revendication 1,
**caractérisé par le fait que** l'on attribue au message en retour, par rapport à une activité d'utilisateur ayant eu lieu sur cet autre terminal (FEx), une priorité telle que cette activité d'utilisateur est possible en respectant une coïncidence temporelle avec une entrée s'effectuant sur le premier terminal de communication (FE1).

7. Procédé selon la revendication 1,
**caractérisé par le fait que** le message en retour sert en même temps de critère de fin mis à disposition par le système.

8. Procédé selon la revendication 1,
**caractérisé par le fait que** le critère de fin est donné par le raccrochage du combiné téléphonique ou par une opération correspondante de l'utilisateur ou encore automatiquement suivant une commande temporelle après la dernière entrée, se rapportant à une procédure, de l'utilisateur.

9. Procédé selon la revendication 1,
**caractérisé par le fait que** le critère de fin peut être présenté comme option d'une barre de menu affichable en relation avec le guide d'utilisation sur le dispositif d'affichage (DL) du premier terminal de communication (FE1) et peut être déclenché par l'information de confirmation (touche BT) de l'utilisateur.

10. Procédé selon la revendication 1 ou 3,
**caractérisé par le fait que** l'information d'activation pour l'établissement du mode de fonctionnement spécial peut être effectuée par la numérotation d'un indicatif d'activation représentant cette opération ou par l'actionnement d'une touche de fonction correspondant à cet indicatif.

11. Procédé selon la revendication 1,
**caractérisé par le fait que** l'information d'activation pour l'établissement du mode de fonctionnement spécial représente une option d'une barre de menu affichable en relation avec le guide d'utilisation sur le dispositif d'affichage (DL) du premier terminal de communication (FE1) et peut être déclenchée par l'information de confirmation (touche BT) de l'utilisateur.

12. Procédé selon l'une des revendications précédentes,
**caractérisé par le fait que**, pour la demande du mode de fonctionnement spécial pour le terminal de communication concerné (FE1), une autorisation à cet effet est attribuée.

13. Procédé selon l'une des revendications précédentes,
**caractérisé par le fait que** les informations suivantes entrées par l'utilisateur après l'information d'activation au moyen des éléments de commande du terminal de communication sont d'abord collectées puis sont transférées, regroupées dans un bloc de données, vers le module de programme (M-FEx) du niveau de structure (VT-LM) déterminant pour la technique de commutation et pour les fonctionnalités.
